# EUROPEAN PATENT APPLICATION

(11) **EP 1 519 212 A1**
(43) Date of publication of application: **30.03.2005**
(21) Application number: 03021893.7
(22) Date of filing: 27.09.2003
(51) Int. Cl.: G02B 26/02

(54) **Display device for irreversibly switching from a first state to a second state**

(71) Applicant: 3M Innovative Properties Company, St. Paul, MN 55133-3427 (US)
(72) Inventor: Kuepper, Anton, 41564 Kaarst (DE); Schumacher, Knut, 41466 Neuss (DE); Schulze, Walter, 41239 Mönchengladbach (DE)
(74) Representative: Hilleringmann, Jochen, Dipl.-Ing.

(57) **Abstract**

The display device (10) capable of irreversibly switching from a first indicating state to a second indicating state comprises a chamber (14) containing an electrolytic liquid (16) and having at least one exit opening (46), and at least two electrodes (22,24) located in said chamber (14) and in contact with said electrolytic liquid (16) as well as subjectable to electric voltage, wherein, upon application of electric voltage of a predetermined level to said electrodes (22,24), gas is generated in said chamber (14) causing the pressure within said chamber (14) to exceed a threshold value such that liquid (16) irreversibly exits said chamber (14) through said at least one exit opening (46) thereby switching from the first indicating state to the second indicating state.

## Description

### BACKGROUND OF THE INVENTION

### Field of the Invention

The present invention relates to a non-reversible display device capable of irreversibly switching from a first indicating state to a second indicating state.

### Related Prior Art

Several indicating or displaying devices of different types and technologies are known in the prior art. Among these types of indicating or displaying devices there are electrochrome display devices (see e.g. DE-A-25 45 391 and DE-A-198 25 371), electroluminescent display devices (see e.g. DE-A-100 42 500), and the widely spread LCD display devices. Moreover, indicating devices are known in which the change of an indicating state results from a chemically induced change of colour (see e.g. EP-B-0 081 031 and DE-A-44 43 470).

The problem with all of the above-identified types of display devices is that maintaining one of the two indicating states requires the provision of energy of a power supply. As soon as power is no longer supplied (e.g. due to an exhaust of the power supply like a battery or the like) the display device automatically switches to the indicating state which requires no power.

In US-A-4,156,559 as well as in DE-B-27 27 854 there is disclosed an electrolytic display cell comprising two parallel plates whereof one is covered by a semi-transparent electrode and whereof the other supports a counter-electrode. Between the electrode and the counter-electrode an electrolyte is arranged containing a metallic salt dissolved in a solvent. The electrode and counter-electrode are connected to the positive and negative terminals of a d.c. voltage source via a switch permitting the connection of each terminal to any one of the electrodes. Connecting the electrode of the electrolytic display device to the negative terminal of the d.c. voltage source results in a electrolytic deposition of the metallic salt of the electrolyte on the semi-transparent electrode resulting in a change of its transmissivity defining a first indicating state. If the electrode is connected to the positive terminal of the d.c. voltage source, the metallic salt disposed on the semi-transparent electrode dissolves into the electrolyte. That means an indication on the known electrolytic display device can be erased again which is a disadvantage if the switch can be operated inadvertently so that valuable information may get lost.

### SUMMARY OF THE INVENTION

It is an object of the present invention to provide a non-reversible bistable display device which works reliably within a wide temperature range and with low activation energy consumption.

Another object of the present invention is to provide a non-reversible bistable display device which can be manufactured with low production costs.

According to the invention, a non-reversible bistable display device capable of irreversibly switching from a first indicating state to a second indicating state is provided, wherein the display device comprises
- a chamber containing an electrolytic liquid and having at least one exit opening, and
- at least two electrodes located in said chamber and in contact with said electrolytic liquid as well as subjectable to electric voltage,
- wherein, upon application of electric voltage of a predetermined level to said electrodes, gas is generated in said chamber causing the pressure within said chamber to exceed a threshold value such that liquid irreversibly exits said chamber-through said at least one exit opening thereby switching from the first indicating state to the second indicating state.

The function of the display device according to the invention is based on the discharge of liquid through at least one exit opening of a chamber by increasing the pressure within the chamber to exceed a threshold value. A specific feature of the invention is that the increase of pressure results from the generation of gaseous components caused by an electrolysis performed within the chamber and initiated upon the application of electrical energy.

Accordingly, the chamber comprises an electrolytic liquid and at least two electrodes subjectable to electric voltage. When applying electric voltage to the at least two electrodes, current flows through the electrolytic liquid resulting in an electrolysis-generated gas. The electrolytic liquid comprises conductivity modulators such as for example a salt or other materials basically known to the those skilled in the art. In particular, the electrolytic liquid can be ink having a sufficient electrical conductivity so as to function as a electrolyte.

An advantage of the display device according to the invention is the comparatively low energy consumption for activating the display device i.e. for discharging liquid out of the chamber thereby irreversibly switching from a first indicating state in which no liquid is discharged, to a second indicating state in which liquid is or has been discharged. Generating the gaseous components using an electrolysis process can already be initiated by the application of relatively low electrical voltage (e.g. in the range of up to about 5 V) and, accordingly, the electrical energy required is rather low. In particular, if the speed of switching from the first indicating state to the second indicating state is of less relevance, the electrolysis can take place over a time of several seconds which further reduces the electrical power required.

By way of experiments it was found out that for example a voltage of around 3V was sufficient when applied to a volume of 15 nanoliter of a aqueous solution containing a salt (e.g. NaCI) and conventional ink particles (e.g. as used in ink jet printers), causing a current of around 0.7 mA and a switching time of about 20 seconds for discharging electrolytic liquid out of the chamber.

Moreover, the design of the display device according to the invention need not be complex and, accordingly, its function and operation can be rather reliable also within a wide temperature range because the electrolysis is relatively independent of the temperature of the electrolytic liquid.

Depending on the content of the chamber either the electrolytic liquid or another indicating liquid can be discharged. In one embodiment of the present invention the chamber is completely filled with electrolytic liquid so that this liquid is discharged out of the at least one exit opening. In another embodiment of the present invention the chamber is partially filled with electrolytic liquid within the area of the two electrodes, but within the area of the at least one exit opening is filled with another indicating liquid. If these two liquids are immisible, the two liquids directly can contact each other. As an alternative of such a design, between both liquids there can be arranged a membrane or the like flexible separating film of wall dividing the chamber into two parts wherein in the one part the at least two electrodes and the electrolytic liquid are arranged and in the other part the at least one exit opening and the indicating liquid are located.

Moreover, in another embodiment of the present invention, the discharged liquid is received by a receiving space which at least partially is visible from outside. The receiving space can be open to the environment so that liquid can exit or the receiving space can be closed. In the latter case a venting opening for exiting gas from the receiving space to the environment when liquid enters the receiving space, can be arranged in the receiving space. However, a venting opening is not necessary, because the gas contained in the receiving space can be compressed when the liquid enters the receiving space. Finally, the receiving space can have an expansion wall so that the receiving space can expand when liquid enters. Also a receiving space can be used employing the mechanisms of venting and/or compression and/or expansion in combination.

In a preferred embodiment of the present invention a porous element is arranged within the receiving space for sucking-up the liquid discharged from the at least one exit opening and entering the receiving space. Preferably, the sucking-up of the liquid takes place by capillary forces generated within the porous element. Most preferably the porous element is a fabric and in particular a non-woven fabric.

It is preferred to have the at least two electrodes and each of the exit openings be spaced from each other as far as possible. By such a design, when gas is generated and the pressure is increased, during at least the first phase of the discharge process the gas pushes liquid out of the at least one exit opening, before perhaps the gas as such flows through the at least one exit opening.

Different shapes of the chamber between the at least two electrodes and the at least one exit opening are possible. For example the chamber can be designed like a channel comprising two opposite ends, the one end being provided with the electrodes and the other end being provided with the at least one exit opening. Moreover, such a channel can be substantially straight or corrugated or spirally wound.

In another aspect of the present invention the at least one exit opening comprises a means for preventing unintended exit of liquid. This means can be a capillary stop i.e. a narrowed area through which the liquid within the chamber will not exit due to surface tension phenomena. Moreover, a capillary stop can be provided by a hydrophobic surface of the chamber within the area of the at least one exit opening. Suitable different designs of capillary stops are known to those skilled in the art of microfluidic systems.

According to another aspect of the present invention, the chamber of the display device comprises at least one weakened location which will break if the pressure within the chamber exceeds a threshold value. The broken weakened location provides an exit opening of the liquid.

One alternative for providing a weakened location is the formation of a thin portion within the wall of the chamber i.e. a hole in the chamber covered by a film which breaks when the pressure within the chamber exceeds a threshold value.

### BRIEF DESCRIPTON OF THE DRAWINGS

The present invention will be described in more detail referring to specific embodiments as depicted in the drawing in which
- Fig. 1: shows a cross-sectional view of a display device according to a first embodiment of the invention in its first indicating state,
- Fig. 2: shows a top view of the display device of Fig. 1 with its cover removed,
- Fig. 3: shows a cross-sectional view of the display device when liquid is transferred from one chamber to an adjacent chamber switching from the first to the second indicating state,
- Fig. 4: shows a top viewof a display device with its cover removed, according to a second embodiment of the invention,
- Fig. 5: shows a top view of a display device with its cover removed, according to a third embodiment of the invention,
- Fig. 6: shows a cross-sectional view of a display device according to a fourth embodiment of the invention,
- Fig. 7: shows a top view of a display device with its cover removed, according to a fifth embodiment of the invention, and
- Fig. 8: shows a cross-sectional view of a display device according to a sixth embodiment of the invention.

### DETAILED DESCRIPTION OF THE PREFERRED EMBODIMENTS

In the Figures different display devices according to the invention are shown wherein like parts of the individual embodiments are referred to by the same reference numerals.

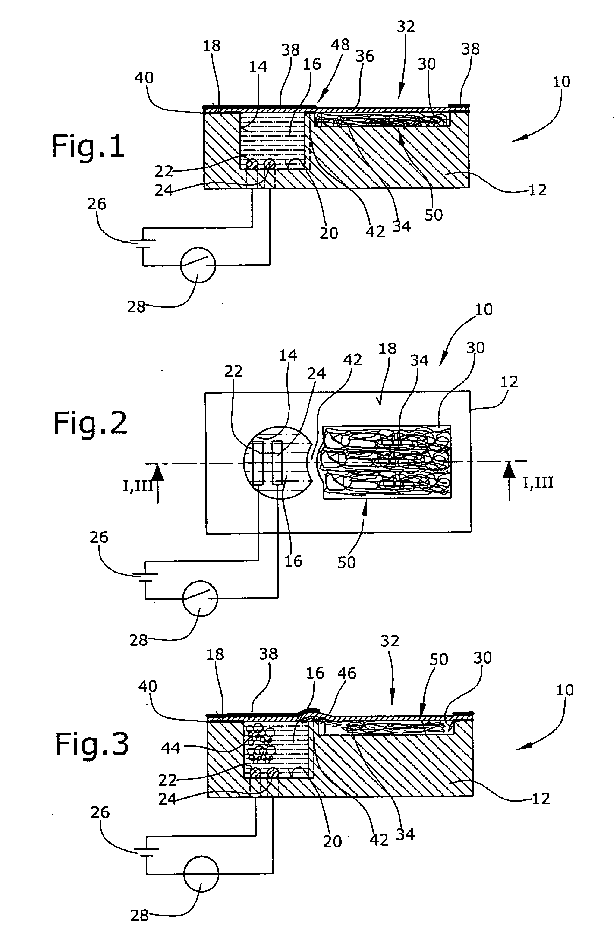

The working principal of the invention will be explained hereinbelow referring to Figures 1 to 3 showing a first embodiment of a non-reversible bistable display device 10. The display device 10 comprises a substrate 12 made of a non conductive material such as molded synthetic material, a foil, or glass. Most preferably the substrate 12 comprises an electrically insulating material. Within the substrate 12 there is provided a chamber 14 containing an electrolyte 16. As can be seen from Figures 1 and 3 the chamber 14 is open to the top side 18 of the substrate 12. Within the chamber 14 and preferably at the bottom 20 thereof, there are arranged two electrodes 22,24 connected to a voltage source 26 via a switch 28.

Beside the chamber 14 within the top side 18 of the substrate 12 there is arranged another recess 30 filled with a porous element 32 provided as a non-woven fabric 34. This non-woven fabric comprises synthetic fibers, for example fibres of polypropylene or polyethylene. However, other fibers are also possible. Also other porous elements 32 are possible like for example foamed elements. As described below, the porous element 32 is selected to provide a structure that, by capillary action, is capable of sucking-up liquid from the chamber 14 and distributing it evenly within the recess 30.

Typically, the chamber 14 has a diameter of less than 10mm and the sides of the recess 30 have a length in the range of from about 5 to 12mm.

The top side 18 of the substrate 12 is covered by a film 36 covering the chamber 14 and the recess 30. The film 36 is transparent within its area covering the recess 30 and is opaque within its remaining area and, accordingly, in particular within the area covering the chamber 14. Within its opaque areas the film 36 can be provided with a coating 38. The film 36 is mounted to the substrate 12 by means of an adhesive layer 40. The film 36 and adhesive layer 40 may, for example, be provided by a conventional transparent adhesive tape applied over the substrate 12.

The chamber 14 and the recess 30 are separated by a curved narrow edge 42 to which the film 36 is also adhered by the adhesive layer 40. If the pressure within the chamber 14 increases, the film 36 will be subjected to a peeling force around the edge of the recess 30. The peeling force will act preferentially at the edge 42 because of the curvature of the latter and, as soon as it exceeds the adhesive force between the film 36 and the adhesive layer 40 or between the edge 42 and the adhesive layer 40 at this point, the film 36 will peel away from the edge 42.

Fig. 1 shows the device 10 in its first indicating state in which the chamber 14 completely filled with electrolytic liquid 16 is closed by the film 36. In Fig. 3 the situation is shown in which the display device 10 is in its second indicating state which will be explained now.

In order to transfer the device 10 from its first indicating state of Fig. 1 to its second indicating state of Fig. 3, an operating voltage is applied to the electrodes 22 and 24 by closing the switch 28. Since the electrolytic liquid 16 is electrically conductive, a current is flowing there through. The flow of current through the electrolytic liquid 16 results in an electrolysis which in turn generates gas bubbles 44. The generation of gas of O₂ and H is a normal process in the electrolysis. These gaseous components increases the pressure within the chamber 14. As a result thereof, the force acting on the film 36 at its interface to the edge 42 decreases the adhesive force therebetween so that the film 36 pops up to a little extent providing an exit opening 46 for the chamber 14. In other words the edge 42 together with the film 36 provides a weakened location 48 which breaks when the pressure in the chamber 14 exceeds a threshold value. Due to the narrow design of the edge 42 the film 36 will release within the area of the edge 42 and not within another area of the top side 18 of the substrate 12. It is possible that several small passages over the edge 42, i.e. several exit openings 46 are provided upon the increase of the pressure within the chamber 14.

As a result of the formation of the exit opening 46, liquid 16 from the chamber 14 exits into the recess 30 which functions as a receiving space 50 for the liquid 16. Liquid 16 entering the non-woven fabric 34 will be sucked thereby so that the fabric 34 is filled with the liquid 16. In case of a coloured liquid 16 i.e. an electrolytic ink, the non-woven fabric 34 will change its colour when soaked with the ink, thereby making visible the switching from the first indicating state in which the non-woven fabric 34 has the colour of the fibers thereof, to the second indicating state in which the non-woven fabric 34 is coloured by the ink.

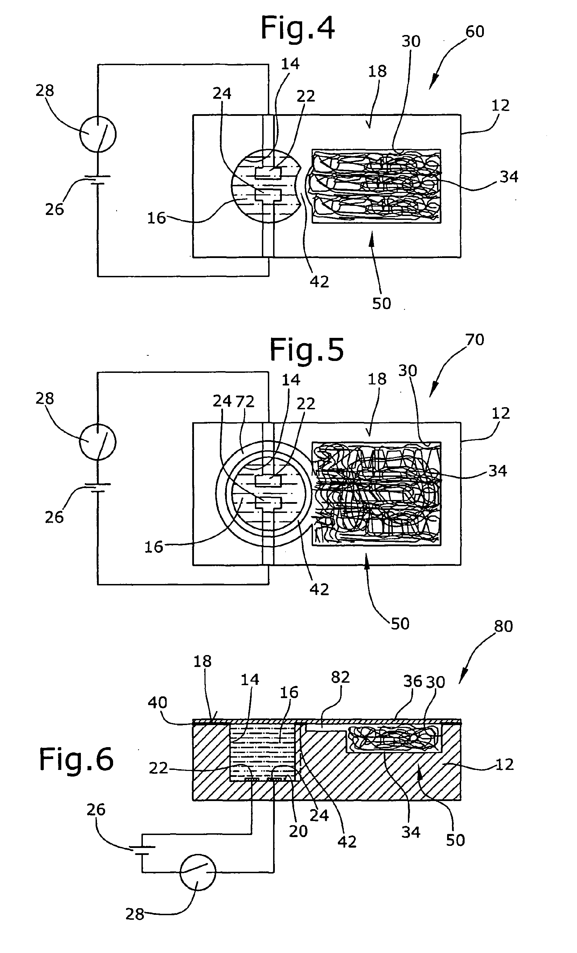

Several different designs of the electrodes 22,24, the edge 42 separating the chamber 14 from the receiving space 50 and the arrangement of these two chambers are shown in Figures 4 to 9.

In particular, the embodiment 60 of Fig. 4 is provided with a substrate 12 manufactured in molded interconnect device (MID) technique. This technique is known to those skilled in the art for forming three dimensional printed circuit boards. The electrodes 22,24 can be formed as electrically conductive traces along the top surface 18 of the substrate 12 and down into the chamber 14. As in Figures 1 to 3, the edge 42 between the chamber 14 and the receiving space 50 (recess 30) at the top side 18 of the substrate 12 is curved towards the chamber 14 resulting in a concentration of the forces for releasing the film 36 from the edge 42.

In Fig. 5 an embodiment of a display device 70 is shown in which an annular channel 72 is arranged around the chamber 14 wherein the annular channel 72 is in fluid communication with the receiving space 50. The edge 42 between the chamber 14 and the receiving space 50 is annular. Due to the surrounding channel 72 irrespective of where the film 36 will release from the edge 42, liquid 16 from the chamber 14 via the channel 72 will be received by the receiving space 50. The substrate 12 of the display device 70 is again made in MID-technique.

In Fig. 6 a display device 80 is shown which, adjacent the edge 42, is provided with a channel 82 leading to the receiving space 50. The benefit of this design is that through the channel 82 which is dimensioned accordingly, liquid 16 can flow due to capillary forces. This supports the exit of liquid 16 from the chamber 14 even if the film 36 is merely slightly separated from the edge 42.

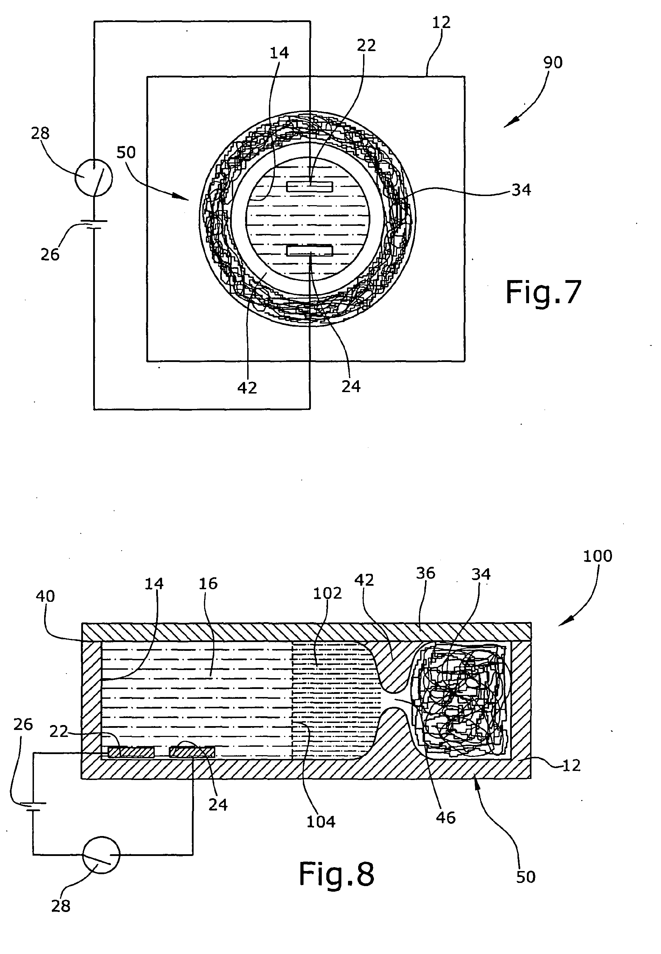

Fig. 7 shows a design of a device 90 wherein the receiving space 50 is arranged as an annular space surrounding the chamber 14. Also the edge 42 separating the chamber 14 from the receiving space 50 is annular.

In Fig. 8 another design of a display device 100 is shown. The chamber 14 of this device 100 is in the form of a straight channel with two opposite ends wherein the electrodes 22, 24 are arranged near one end and the exit opening 46 is arranged at the other end. Distancing the electrodes 22, 24 from the exit opening 46 in this way can be useful in certain circumstances in preventing gas bubbles generated during electrolysis in the liquid 16 from entering the receiving space 50. If it is required to increase the length of the channel-shaped chamber 14, it may be necessary to use a channel that follows a corrugated or a spiral path (rather than a straight path) to avoid an undesirable increase in the length of the device 100.

The exit opening 46 of the chamber 14 of device 100 is designed such that liquid 16 of the chamber 14 does not exit there through under normal pressure conditions. In other words the exit opening 46 forms a capillary stop preventing liquid 16 from flowing out of the chamber 14. The capillary stop function can be overcome in the device 100 upon the increase of the pressure within the chamber 14 when the electrolysis takes place. In this case, liquid 16 is discharged through the exit opening 46 into the adjacent receiving space 50.

In connection with Fig. 8 another alternative of the present invention will be described which alternative can also be used in the embodiments of Figures 1 to 7.

As can be seen in Fig. 8, the chamber 14 is filled with two different liquids 16 and 102. Liquid 16 which is in contact with the electrodes 22 and 24 is an electrolyte as described above. The other liquid 102 is not necessarily an electrolyte and is located within that part of the volume of the chamber 14 which is located between the electrolyte 16 and the exit opening 46. Increasing the pressure of the electrolyte 16 due to electrolysis, will result in a force acting on the volume of liquid 102 causing liquid 102 to exit from the chamber 14 into the receiving space 50.

The interface between both liquids 16 and 102 is referred to in Fig. 8 by 104. These two liquids can contact each other directly if the liquids are not immisible. In order to guarantee no mixing-up of the two liquids, at the interface 104 thereof a flexible membrane (not shown) can be arranged.

Although the invention has been described and illustrated with reference to specific illustrative embodiments thereof, it is not intended that the invention be limited to those illustrative embodiments. Those skilled in the art will recognise that variations and modifications can be made without departing from the true scope of the invention as defined by the claims that follow. It is therefore intended to include within the invention all such variations and modifications as fall within the scope of the appended claims and equivalents thereof.

## Claims

1. Display device capable of irreversibly switching from a first indicating state to a second indicating state, the display device comprising:
- a chamber (14) containing an electrolytic liquid (16) and having at least one exit opening (46), and
- at least two electrodes (22,24) located in said chamber (14) and in contact with said electrolytic liquid (16) as well as subjectable to electric voltage,
- wherein, upon application of electric voltage of a predetermined level to said electrodes (22,24), gas is generated in said chamber (14) causing the pressure within said chamber (14) to exceed a threshold value such that liquid irreversibly exits said chamber (14) through said at least one exit opening (46) thereby switching from the first indicating state to the second indicating state.

2. Display device according to claim 1, further comprising a receiving space (50) for receiving liquid (16) exiting said chamber (14) through said at least one exit opening (46) when the pressure therein exceeds the threshold value.

3. Display device according to claim 2, further comprising a porous element (32) arranged within said receiving space (50) and for sucking-up liquid (16) entering said receiving space (50) from the chamber (14).

4. Display device according to claim 3, wherein said porous element (32) is a fabric, in particular a nonwoven fabric (34).

5. Display device according to any one of claims 1 to 4, wherein said electrodes (22,24) and said at least one exit opening (46) of said chamber (14) are spaced apart from each other, preferably as far as possible.

6. Display device according to any one of claims 1 to 5, wherein said chamber (14) is shaped like a channel comprising two opposite ends spaced apart from each other and wherein said electrodes (22,24) are arranged near the one end and said at least one exit opening (46) is arranged near the other end of said channel.

7. Display device according to claim 6, wherein the channel substantially is straight.

8. Display device according to any one of clams 1 to 7, wherein the chamber is closed and wherein a weakened location (48) is arranged in a wall of said chamber (14), said weakened location (48) being capable of breaking if the pressure within said chamber (14) exceeds said threshold value.

9. Display device according to claim 8, wherein said weakened location (48) is formed by a thinner portion of the wall of said closed chamber (14).

10. Display device according to any one of claims 1 to 7, further comprising a substrate (12), a recess formed within an outer surface (18) of said substrate (12), and a covering layer (36) covering said recess and attached to said outer surface of said substrate by a bonding material (40) to form said closed chamber (14), said weakened location (48) being formed by a narrowed region (42) in the area in which said covering layer (36) is adhered to said outer surface (18) of said substrate (12).

11. Display device according to claim 10, wherein said recess at least partially is surrounded by an edge (42) forming the narrowed region.

12. Display device according to claim 11, wherein said edge (42) is curved.

13. Display device according to any one of claims 10 to 12, wherein said substrate (12) comprises another recess (30) adjacent said edge (42) and forming said receiving space (50).

14. Display device according to claim 12, wherein the covering layer (36) covers both recesses (50).

15. Display device according to any one of claims 11 to 13, wherein said edge (42) extends along a circle and wherein said receiving space (50) extends around said edge (42).

16. Display device according to any one of claims 1 to 7, wherein a capillary stop is arranged in said at least one exit opening (46).

17. Display device according to any one of claims 1 to 16, wherein said chamber (14) is filled with said electrolytic liquid (16) up to said at least one exit opening (46) and wherein electrolytic liquid (16) exits through said at least one exit opening (46) when the pressure within said chamber (14) exceeds the threshold value.

18. Display device according to any one of claims 1 to 16, wherein within said chamber (14) between said electrolytic liquid (16) and said at least one exit opening (46) there is arranged an indicating liquid (102) exiting through said at least one exit opening (46) when the pressure within said chamber (14) exceeds the threshold value.

19. Display device according to claim 18, wherein said indicating liquid (102) is immisible with the electrolytic liquid (16).

20. Display device according to claim 18 or 19, wherein said indicating liquid (102) and said electrolytic liquid (16) are separated by a flexible membrane.

21. Display device according to any one of claims 1 to 20, wherein said liquid (16) exiting through said at least one exit opening (46) when the pressure within said chamber (14) exceeds the threshold value is coloured.
